# EUROPEAN PATENT SPECIFICATION

(11) **EP 3 050 826 B1**
(45) Date of publication and mention of the grant of the patent: **15.03.2017**
(21) Application number: 15003183.9
(22) Date of filing: 06.11.2015
(51) Int. Cl.: B29C 43/18, B65G 11/16, B65D 90/04, B29K 709/02, B29K 705/00, B29C 37/00

(54) **WEAR-RESISTANT LINING**
VERSCHLEISSFESTER BELAG
REVÊTEMENT RÉSISTANT À L'USURE

(30) Priority: 27.01.2015 JP 2015012963
(43) Date of publication of application: 03.08.2016
(73) Proprietor: Nippon Tsusho Kabushiki Kaisha, Chiyoda-ku Iwamoto-cho 1-8-10 Tokyo 101-0032 (JP)
(72) Inventor: Uchida, Masahiro, Sakai-shi, Osaka-fu (JP); Fujisaki, Nobuyoshi, Osaka-shi, Osaka-fu (JP); Ohse, Atsushi, Osaka-shi, Osaka-fu (JP)
(74) Representative: Hering, Hartmut

(56) References cited:
- EP-A1- 0 552 666
- EP-A1- 1 901 978
- WO-A1-2014/167572
- FR-A1- 2 189 211
- JP-A- 2000 280 251
- JP-A- 2004 107 067

## Description

### [Field of the Invention]

The present invention relates to a wear-resistant lining to be used as linings covering surfaces of an industrial apparatus, where a wear-resistant quality is desired, such as hoppers or chutes for throwing or guiding ironstones or coals thereon, pulleys for belt conveyors and the like.

### [Background of the Invention]

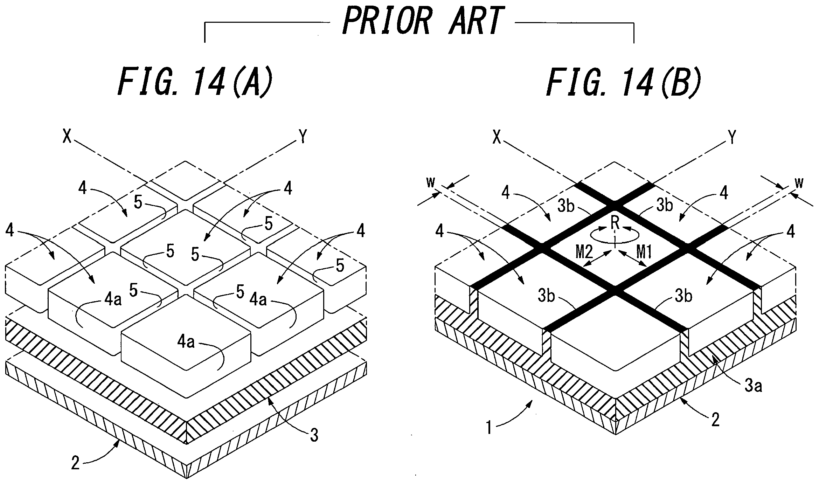

Conventionally a wear-resistant lining as shown in Fig.14 (herein after referred to as "prior art") is provided. The wear-resistant lining 1 is manufactured by such a process that a thick sheet-like un-vulcanized rubber material 3 is laid on a metal support plate 2, and ceramic pieces 4 are arranged on said rubber material 3 in lengthwise and crosswise directions to form gaps 5 between side-walls 4a of the adjacent ceramic pieces 4 as shown in Fig.14 (A). The metal support plate 2, the rubber material 3 and the ceramic pieces 4 are inserted in a mold, and pressed and heated.

As a result, the wear-resistant lining 1 as shown in Fig.14(B) is obtained. Said rubber material 3 is vulcanized so that a plate-like resilient base layer 3a is formed for supporting bottoms of said ceramic pieces 4, and grid-shaped joints 3b are formed which are filled in said gaps 5. Said base layer 3a and said joints 3b are integrated and bonded on the bottom and the periphery of said ceramic pieces 4 respectively.

When the wear-resistant lining 1 mentioned above is used for a hopper for receiving objects such as ironstones for example, the metal plate 2 is attached on a surface of the hopper. The objects such as ironstones thrown in the hopper are received by the ceramic pieces 4 of the lining 1 so that the surface of the hopper is protected and prevented from wearing.

The ceramic pieces 4 are supported resiliently by the base layer 3a so that strong impact by the bumping objects thrown in the hopper may be absorbed. Since the ceramic piece 4 is bonded to the base layer 3a at its bottom as well as the joints 3b at its periphery, the ceramic piece 4 is prevented from being peeled off and fallen away. This means that the joints 3b have an important function for holding the ceramic piece 4 which may be cracked or fallen away

As far as the ceramic piece 4 is supported and held by the base layer 3a and the joints 3b, it is possible to reduce the noise caused by the bumping objects and it may prevent the ceramic pieces 4 from being cracked or being peeled off to fall away from the resilient base layer 3a.

### [Prior Art Documents]

### [Patent Documents]

Prior art wear-resistant linings are disclosed in the following documents.
Patent document 1: JP 2829498 B
Patent document 2: JPH 0420604 Y (US 4761317 A)
Patent document 3: JP 2004107067 A
Patent document 4: WO 2014/167572 A1

Patent document 3 discloses all the features of the preamble of claim 1.

### [Summary of the Invention]

### [Problems to be solved by the Invention]

According to the prior art mentioned above, the manufacturing of the wear-resistant lining 1 requires a process to form gaps 5 when the ceramic pieces 4 are arranged on the un-vulcanized rubber material 3 in lengthwise and crosswise directions, and the working operation of arranging the ceramic pieces 4 is made cumbersome and complicated.

When manufacturing the wear-resistant lining 1, the metal support plate 2, the un-vulcanized rubber material 3 and the ceramic pieces 4 are inserted in a mold, and heated and pressed to be sandwiched. During vulcanization, the rubber material is plastically deformed and enters the gaps 5 between the adjacent ceramic pieces 4 with pressure to form the joints 3b. Due to such entering pressure, the ceramic pieces 4 may move in a various directions such as in the rotating direction R or in the queuing directions M1 or M2 as shown in Fig.14 (B) in case of prior art.

As a result, the width of the gaps 5 are made narrower or wider partially during the molding process so that the width (w) of the grid-shaped joints 3b may become uneven in the product of the wear-resistant lining 1. Such unevenness of the joints 3b not only spoils the visual appearance of the product but also decreases partially the function for holding the ceramic piece 4. It causes easily such a result that the ceramic piece 4 is cracked or fallen away from the base layer 3a due to the bumping objects, when the wear-resistant lining 1 is used for a hopper or the like.

Further, the individual ceramic piece 4 may move independently via resilient deformation of the joints 3b upon receipt of the bumping objects. When the adjacent ceramic pieces 4 move in deferent directions, however, the joint 3b between the ceramic pieces 4 is subjected to shear and may be peeled off.

### [Means for Solving the Problems]

The present invention provides a wear-resistant lining, which has solved the problem mentioned above, comprising a resilient base layer of vulcanized rubber, wear-resistant hard pieces arranged on said base layer in lengthwise and crosswise directions and grid-shaped joints of vulcanized rubber filled in gaps between side-walls of the adjacent hard pieces, wherein said hard piece is bonded to said base layer and said joints, wherein said wear-resistant lining is manufactured by such a process that a plate-like un-vulcanized rubber material and wear-resistant hard pieces arranged thereon with said gaps are pressed and heated in a mold so that said resilient base layer and said joints are formed by vulcanizing said rubber material and filling it in said gaps, wherein each side-wall of said hard piece is provided with at least one projection which contacts with the side-wall of the adjacent hard piece so that said gap is formed to have a predetermined width in which said joint is formed, and said projections of the hard piece are embedded in said joints.

In an embodiment of the present invention, said hard piece has a rectangular shape in cross section to form four side-walls on the periphery and provides each side-wall with one projection, each of said side-walls includes a right-side portion and a left-side portion with respect to a center thereof in which the specific one side portion is provided with said projection and the other side portion is formed with a receiving surface, and each projection contacts with each corresponding receiving surface between the adjacent hard pieces so that the side-walls of the adjacent hard pieces are connected by the respective projection and the respective receiving surface alternately.

Preferably, said hard piece has a rectangular shape in cross section which includes a first pair of opposite side-walls on which an axis (X) extends to intersect central portions thereof and a second pair of opposite side-walls on which an axis (Y) extends to intersect central portions thereof, said hard piece forms a top-wall of an arch shape expanding upward between said first pair of side-walls to which said second pair of side-walls extend vertically to be connected therewith, and said hard pieces are arranged on said base layer according to the both directions along said axes (X) (Y) respectively so that a valley is formed between said top-walls of the adjacent hard pieces, and un upper layer of rubber is provided over the hard pieces and filled in said valley to be integrated with said joints.

In a preferred embodiment according to the present invention, a metal support plate is bonded underneath the resilient base layer which provides its periphery with a standing wall, said hard pieces positioning adjacent to said standing wall contact their projections with said standing wall to form peripheral gaps between the side-walls thereof and said standing wall so that peripheral joints are formed with rubber filled in said peripheral gaps, and said projections are embedded in said peripheral joints.

In another embodiment according to the present invention, said hard piece has a rectangular shape in cross section to form four side-walls on its periphery and provides each side-wall with a recess in which a key is inserted, said key forms said projection when inserted in the mutual recesses of the adjacent hard pieces, and whereby said projection forms said gap for the joint between the opposite side-walls of the adjacent hard pieces.

### [Effect of the Invention]

According to the present invention, the wear-resistant lining 11 may be used to cover the inner surface of the hopper 12 for example so that the objects such as ironstones thrown therein are received by the hard pieces 16 thereof. As a result, the surface of the hopper is protected and prevented from wearing.

The hard pieces 16 arranged in lengthwise and crosswise directions are supported resiliently by the base layer 14 so that strong impact by the bumping objects thrown in the hopper may be absorbed. Accordingly, the noise caused by the bumping objects is reduced and the hard pieces 16 are prevented from being cracked.

Since the ceramic piece 16 is bonded to the base layer 14 at its bottom as well as the joints 18 at its periphery, the ceramic piece 16 is prevented from being peeled off and fallen away.

According to the most characteristic feature of the present invention, an evenness of the width of the grid-shaped joints 18 is achieved. Since the width of the joint 18 is defined by the gap 15, and the width of the gap 15 is regularly formed by the projection 19 provided on the side-wall of the hard piece 16, then no undesirable narrowed portion nor undesirable broaden portion is included in the joints 18.

As a result, the periphery of the hard piece 16 is held by and bonded to the joint 18 having a sufficient width as desired for holding the hard piece 16 that prevents the hard piece 16, against the impact by the bumping object, from being cracked and from being peeled off or fallen away. Since the adjacent hard pieces 16 in rows are contacted with each other by the projections 19 embedded in the joints 18, any individual hard piece 16 may not move independently upon receipt of the bumping objects. Accordingly, the adjacent hard pieces 16 may not move to be hit with each other and may not cause any cracks thereon.

In particular, according to the present invention, the impact of the bumping object against the individual hard piece 16 may be scattered to the plural hard pieces 16 joined together by the projections 19 and the joints 18 so that the impact is effectively absorbed by the underneath base layer 14. The impact of the bumping object may be received by whole area of the plural hard pieces 16 joined together without causing a shearing force between the adjacent hard pieces 16. As a result, the joint 18 may be prevented from being peeled off, and the adhesion between the joint 18 and the hard piece 16 is kept long time.

Further, in a process of manufacturing the wear-resistant lining 11, it is easy to arrange the hard pieces 16 on the plate-like un-vulcanized rubber material 14M in lengthwise and crosswise directions. By contacting the respective projections 19 step-by-step according to the arrangement of the hard pieces 16 in rows, it becomes easy to form an even width of the gaps 15, and also easy to align hard pieces 16.

### [Brief Description of the Drawings]

Fig.1 (A), Fig.1 (B) and Fig.1 (C) show a first embodiment of a wear-resistant lining according to the present invention, in which Fig.1 (A) shows a perspective view of the wear-resistant lining, Fig.1 (B) shows a vertical cross sectional view of the wear-resistant lining which is mounted on a hopper, and Fig.1 (C) shows the wear-resistant lining of which upper rubber layer has worn away.
Fig.2 shows a partial perspective view of the first embodiment of the wear-resistant lining according to the present invention.
Fig.3 (A) and Fig.3 (B) show a hard piece used for the first embodiment of the wear-resistant lining according to the present invention, in which Fig.3 (A) shows a perspective view of the hard piece, and Fig.2(B) shows a plan view of the hard piece.
Fig.4 shows a lateral cross sectional view of the first embodiment of the wear-resistant lining according to the present invention.
Fig.5 shows a vertical cross sectional view of the first embodiment of the wear-resistant lining along the line A-A of Fig.4.
Fig.6 shows a vertical cross sectional view of the first embodiment of the wear-resistant lining along the line B-B of Fig.4.
Fig.7 shows a perspective view illustrating a preparation process for manufacturing the wear-resistant lining according to the present invention where a metal plate, a plate like un-vulcanized rubber material, hard pieces and an upper un-vulcanized rubber material are arranged in the predetermined positions.
Fig.8 shows a lateral cross sectional view of the hard pieces arranged in lengthwise and crosswise directions in the preparation process for manufacturing the wear-resistant lining according to the present invention.
Fig.9 (A) and Fig.9 (B) show vertical cross sectional views illustrating a manufacturing process of the wear-resistant lining according to the present invention, in which Fig.9 (A) shows a preceding process with a mold opened and Fig.9 (B) shows a subsequent molding process with the mold closed.
Fig.10 (A) and Fig.10 (B) show a hard piece used for a second embodiment of the wear-resistant lining according to the present invention, in which Fig.10 (A) shows a perspective view of the hard piece, and Fig.10 (B) shows a plan view of the hard piece.
Fig.11 shows a partial perspective view of the second embodiment of the wear-resistant lining in which the hard pieces as shown in Fig.10 are used.
Fig.12 (A) and Fig.12 (B) show vertical cross sectional views of a third embodiment of the wear-resistant lining according to the present invention, in which Fig. 12 (A) shows the lining which is not curved and Fig. 12 (B) shows the lining which is flexed and curved.
Fig.13 (A), Fig.13 (B) and Fig.13 (C) show perspective views of a hard piece used for a fourth embodiment of the wear-resistant lining according to the present invention, in which Fig.13 (A) illustrates the hard piece, Fig.13 (B) illustrates a relationship of a key and a recess, and Fig.13 (C) illustrates the hard pieces in which a key is inserted in the mutual recesses of the adjacent hard pieces.
Fig.14 (A) and Fig.14 (B) show partial perspective views of a prior art wear-resistant lining, in which Fig.14 (A) shows a preparation process for manufacturing the wear-resistant lining and Fig.14 (B) shows the wear-resistant lining manufactured.

### [Description of Preferred Embodiments of the Invention]

Preferred embodiments of the wear-resistant lining according to the present invention are described as follows.

### (First Embodiment)

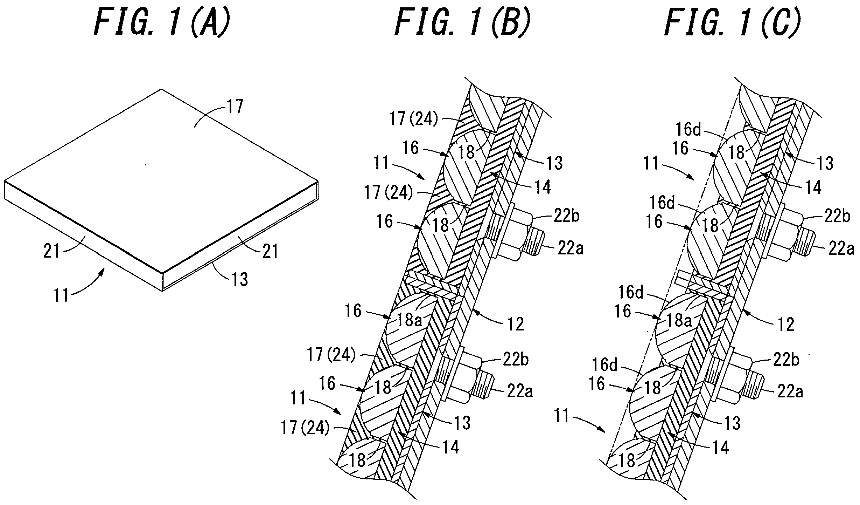

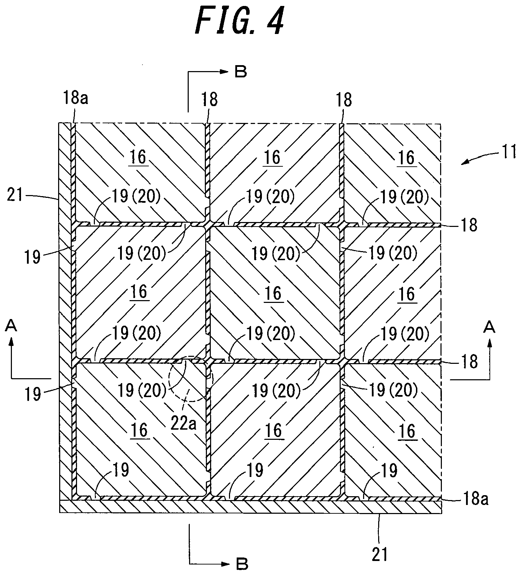

A first embodiment of the wear-resistant lining according to the present invention is shown in Fig.1 to Fig.9. The wear-resistant lining 11 as shown in Fig.1 (A) may be used for a hopper 12 for receiving objects such as ironstones for example. The lining 11 is attached to cover inner surface of the hopper 12 for receiving the objects such as ironstones thrown in the hopper 12 so that the surface of the hopper is protected and wearing thereof is prevented.

Although the hopper is illustrated, the wear-resistant lining 11 may be used as linings covering surfaces of an industrial apparatus other than hoppers, where a wear-resistant quality is desired, such as chutes for guiding coals or pulleys for belt conveyors and the like.

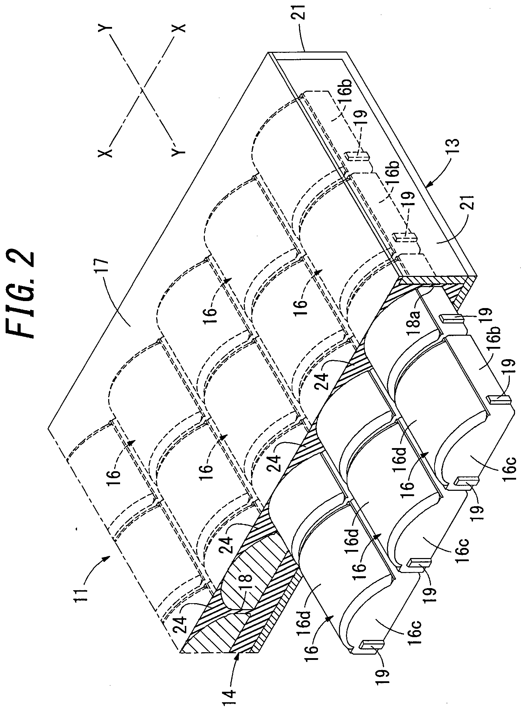

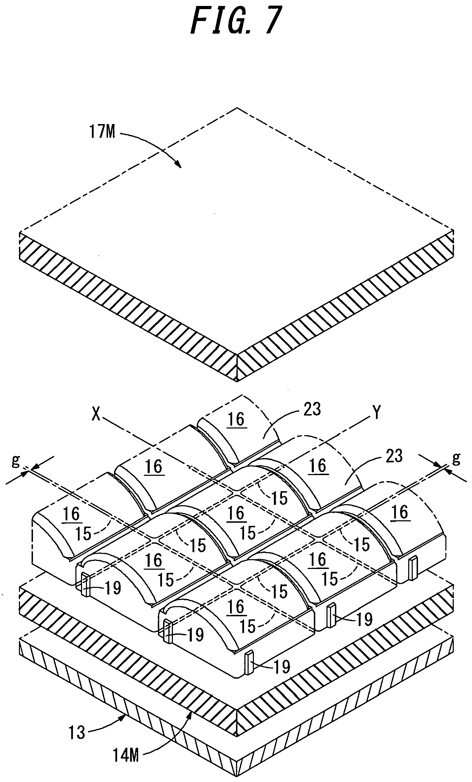

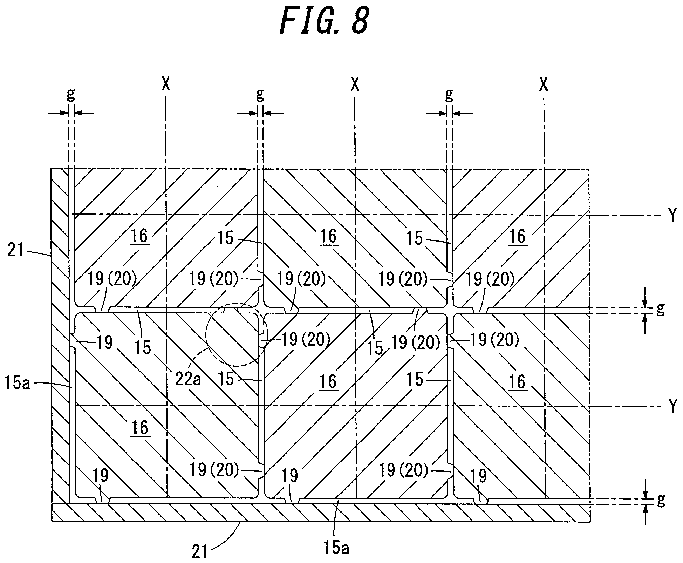

As shown in Figs.1 and 2, the wear-resistant lining comprises a metal plate 13, a resilient base layer 14 of vulcanized rubber which is layered on the metal plate 13, wear-resistant hard pieces 16 arranged on the base layer 14 in lengthwise and crosswise directions to form gaps 15 (see Figs.7 and 8) between side-walls of the adjacent hard pieces 16, un upper layer 17 of vulcanized rubber covering the hard pieces 16, and grid-shaped joints 18 of vulcanized rubber filled in the gaps 15. Said base layer 14, said joints 18 and said upper layer 17 of rubber respectively are integrated with each other and are bonded to the bottom surface, the peripheral surface and the top surface of the hard piece 16 respectively.

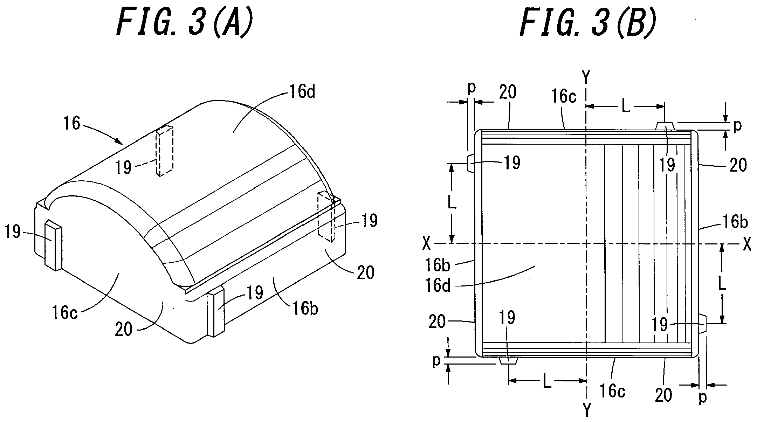

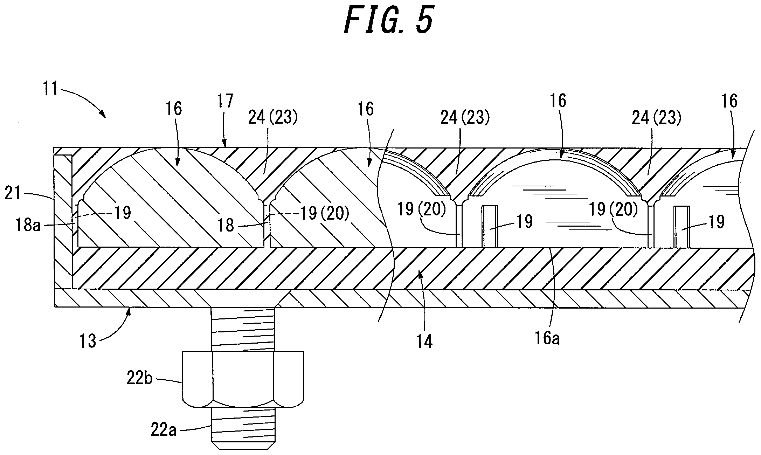

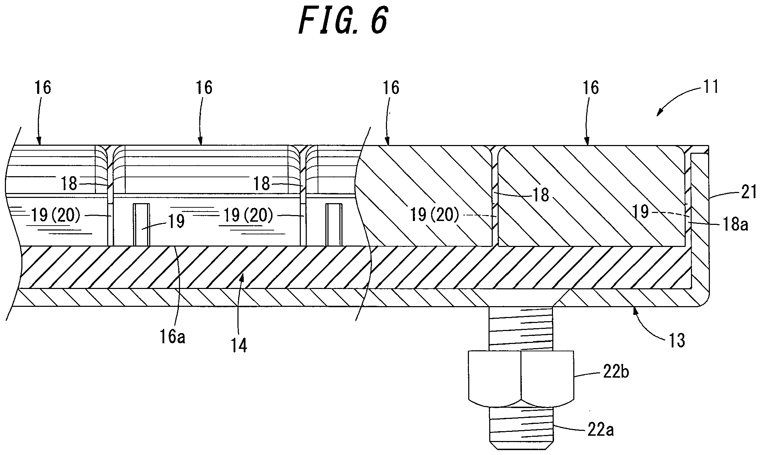

As shown in Fig.3 (A) and Fig.3 (B), the hard piece 16 is provided with a flat bottom surface 16a (see Figs.5 and 6) and is formed in a rectangular shape in lateral cross section to have four side-walls including a first pair of opposite side-walls 16b, 16b and a second pair of opposite side-walls 16c, 16c. Each of side-walls 16b, 16c includes a right-side portion and a left-side portion with respect to a center thereof, and the selected specific side-portion is provided with at least one projection 19 and the other side portion is formed with a receiving surface 20.

In the example as shown in Fig.3 (B), said right-side and left-side portions of the side-wall are located at both sides with respect to axes (X) and (Y) as shown. The first pair of opposite side-walls 16b, 16b include said right-side and left-side portions with respect to the axis (X) which extends between said side-walls 16b, 16b and intersects the center thereof, and the second pair of opposite side-walls 16c, 16c include said right-side and left-side portions with respect to the axis (Y) which extends between said side-walls 16c, 16c and intersects the center thereof. Each projection 19 is provided on one side portion (left-side portion in the illustrated example) of the respective side-wall at a portion apart from the respective axis with a distance (L) and protrudes as shown by the reference (p).

In the first embodiment, said hard piece 16 is made of hard ceramic and forms a top-wall 16d of an arch shape which expands upward between the first pair of side-walls 16b, 16b, and the second pair of side-walls 16c, 16c extend vertically to be connected to the top-wall 16d. The hard piece 16, however, may be made by casting a hard metal.

Said metal plate 13 has a rectangular shape and provides its periphery with a standing wall 21, and bolts 22a are implanted underneath of the metal plate 13. Said resilient base layer 14 is vulcanized and bonded on the upper surface of the metal plate 13, and the periphery thereof is bonded on the inner side surface of the standing wall 21.

A number of hard pieces 16 are arranged on the resilient base layer 14 in lengthwise and crosswise directions along said axes (X) and (Y) so that a valley 23 is formed between the top-walls 16d, 16d of the adjacent hard pieces 16, 16 lined up in the direction of the axis (X). The resilient base layer 14 is vulcanized and bonded to the bottom surfaces 16a of the hard pieces 16.

The projection 19 contacts with the receiving surface 20 between the adjacent hard pieces 16 lined up in the directions (X) and (Y), and said gaps 15 are formed between the opposite side-walls thereof. The opposite side-walls 16b, 16b of the adjacent hard pieces 16, 16 lined up in the direction of the axis (X) are connected at two locations (right-side and left-side portions) by contacting the respective projections 19 with the respective receiving surfaces 20 alternately. In the similar way, the opposite side-walls 16c, 16c of the adjacent hard pieces 16, 16 lined up in the direction of the axis (Y) are connected at two locations (right-side and left-side portions) by contacting the respective projections 19 with the respective receiving surfaces 20 alternately.

Said upper layer 17 of vulcanized rubber covering the hard pieces 16 is filled in said valleys 23 to form fillers 24 and is bonded on the top-walls 16d of the hard pieces 16.

Said grid-shaped joints 18 are formed by extensions of the vulcanized rubber of said base layer 14 as well as said upper layer 17 which are filled in the gaps 15 and bonded to the whole periphery, i.e. the side-walls 16b, 16b and the side-walls 16c, 16c, of the hard piece 16. Accordingly, the projections 19 are embedded in the joints 18.

The hard pieces 16 are arranged in the area surrounded by the standing wall 21 in a regular order. In the peripheral area of the wear-resistant lining 11, the hard pieces 16 are lined up in parallel with the standing wall 21, and peripheral joints 18a are formed with vulcanized rubber filled in peripheral gaps 15a between the hard pieces 16 and the standing wall 21. The peripheral gaps 15a are formed by contacting the projections 19 of the hard pieces 16 with the standing wall 21, and the peripheral joints 18a are formed by rubber extensions of the base layer 14 vulcanized and filled in the peripheral gaps 15a. Accordingly, said projections 19 are embedded in the peripheral joints 18a.

The wear-resistant lining 11 may be used for the hopper 12 as shown in Fig.1 (B) for example to which objects such as ironstones are thrown. The wear-resistant lining 11 is mounted on the inner surface of the hopper by attaching the metal support plate 13 thereto by the bolts 22a and the nuts 22b. As a result, the objects such as ironstones thrown in the hopper are received by the hard pieces 15 so that the surface of the hopper is protected and prevented from wearing.

The hard pieces 16 are supported resiliently by the base layer 14 so that strong impact caused by the bumping objects thrown in the hopper may be absorbed. Then the noise caused by the bumping objects is reduced and the hard pieces 16 are prevented from being cracked.

Since the ceramic piece 16 is bonded to and supported by the base layer 14 at its bottom, and bonded to and held by the joints 18 at its periphery, then the ceramic piece 16 is prevented from being peeled off and fallen away.

In case of the prior art mentioned above with reference to Fig.14 (A) and Fig.14 (B), the width of the grid-shaped joints may be uneven including narrowed or broaden portions partially, and the narrowed portion of the joints decreases the function for holding the hard piece. Since the narrowed portion makes a thin walled portion of the joint of which deformability is not enough, it is difficult to hold the hard piece against shearing forces caused therein due to the impact by the bumping objects. As a result, the joints may be easily peeled off from the side-wall of the hard piece, and the hard piece may be fallen away.

Moreover, the individual hard piece is held independently by the base layer and the joints in the prior art, it may move and vibrate by deformation of the joint independently. The narrowed portion of the joint makes the side-walls of the adjacent hard pieces get closer, the hard pieces may be cracked or chipped by hitting with each other due to the movement thereof by the impact of the bumping objects. Such cracking or chipping may cause the hard pieces either worn early or fallen away.

In the prior art, when the individual hard piece is moved or vibrated independently upon receipt of the bumping objects, the joint is subjected to shear which may cause break the adhesion between the joint and hard piece.

In comparison with the foregoing prior art, the wear-resistant lining 11 according to the present invention achieves an evenness of the width of the grid-shaped joints 18 including the peripheral joints 18a. Since the width is regularized by the projection 19 defined by the predetermined dimension (p), no undesirable narrowed portion nor undesirable broaden portion is included in the joints 18.

As a result, the periphery of the hard piece 16 is surrounded by and bonded to the joint 18 having a sufficient width as desired for holding the hard piece 16 that prevents the hard piece 16, against the impact by the bumping object, from being cracked and peeled off or fallen away. Since the adjacent hard pieces 16 in rows are contacted with each other by the projections 19 embedded in the joints 18, any individual hard piece 16 may not move independently upon receipt of the bumping objects. Accordingly, the adjacent hard pieces 16 may not move to be hit with each other and may not cause any cracks thereon. The impact of the bumping object against the individual hard piece 16 may be scattered to the plural hard pieces 16 joined together by the projections 19 and the joints 18, and the impact is absorbed by the underneath base layer 14.

Since the adjacent hard pieces 16 are connected in an abutting contact manner by the respective projections 19 embedded in the joint 18, the individual hard piece 16 is prevented from moving independently upon receipt of the bumping objects. The adjacent hard pieces 16 may not collide to be cracked. The impact of the bumping object against the individual hard piece 16 may be scattered to the plural hard pieces 16 joined together by the projections 19 and the joints 18, and the impact is effectively absorbed by the underneath base layer 14. The impact of the bumping object may be received by whole area of the plural hard pieces 16 without causing a shearing force between them, the joint 18 may be prevented from being peeled off, and the adhesion between the joint 18 and the hard piece 16 is kept long time.

As shown in Fig.1 (C), when the fillers 24 of the upper layer 17 are scraped off upon receipt of the bumping objects, the rounded top-walls 16d of the hard pieces 16 appear on the surface. In comparison to a flat surface which may receive face-to-face impact of bumping objects by a flat plane, the curved surface of the top-wall 16d is effective for bouncing the bumping objects in the deflected directions, and the top-wall 16d may be prevented from causing cracks. As a consequence of receiving the bumping objects, the hard pieces 16 become worn gradually from the top-walls 16d, however, the surface of the hopper 12 is protected until the hard pieces 16 are worn off entirely.

### (Process for Manufacturing the Wear-resistant Lining)

Fig.7 to Fig.9 illustrate a process for manufacturing the wear-resistant lining 11 of the above-mentioned first embodiment.

Fig.7 shows a preparation process of arranging the elements for manufacturing the wear-resistant lining 11. The elements comprise a metal support plate 13, a plate like un-vulcanized rubber material 14M, wear-resistant hard pieces 16, and a sheet like upper un-vulcanized rubber material 17M.

The plate like un-vulcanized rubber material 14M is laid on the metal support plate 13. The entire upper surface of the metal support plate 13 surrounded by the standing wall 21 is covered by the plate like un-vulcanized rubber material 14M. The plate like un-vulcanized rubber material 14M may be of a single or of a plural either.

A number of hard pieces 16 are arranged in lengthwise and crosswise directions along the both axes (X) and (Y) on the plate like un-vulcanized rubber material 14M. Gaps 15 are formed between the opposite side-walls 16b, 16b of the adjacent hard pieces 16, 16 lined up in the direction of the axis (X) and between the opposite side-walls 16c, 16c of the adjacent hard pieces 16, 16 lined up in the direction of the axis (Y) in such manner of contacting the respective projections 19 with the respective receiving surfaces 20.

As shown in Figs.7 and 8, the gaps 15 are formed to have an even width (g) in the both directions of axes (X) and (Y) which is regularly formed by the projection 19 provided on the side-wall of the hard piece 16. No narrowed portion or broaden portion is included in the gaps 15.

Each adjacent hard pieces 16, 16 are connected at two locations of each side-wall by contacting the projection 19 with the receiving surface 20 alternately. The hard piece 16 is prevented from being rotated and eccentric positioned from the alignment. The work operation to align the hard pieces 16 along the axes (X) and (Y) becomes easy.

As shown in Fig.8, the work operation for lining up the hard pieces 16 becomes easy by carrying out such manner that a first hard piece 16F is placed at a corner of the standing wall 21, then subsequent hard pieces 16 are lined up along the inner surfaces of the standing wall 21 in the directions of the axes (X) and (Y).

The sheet like upper un-vulcanized rubber material 17M is laid over the hard pieces 16 lined up on the plate like un-vulcanized rubber material 14M.

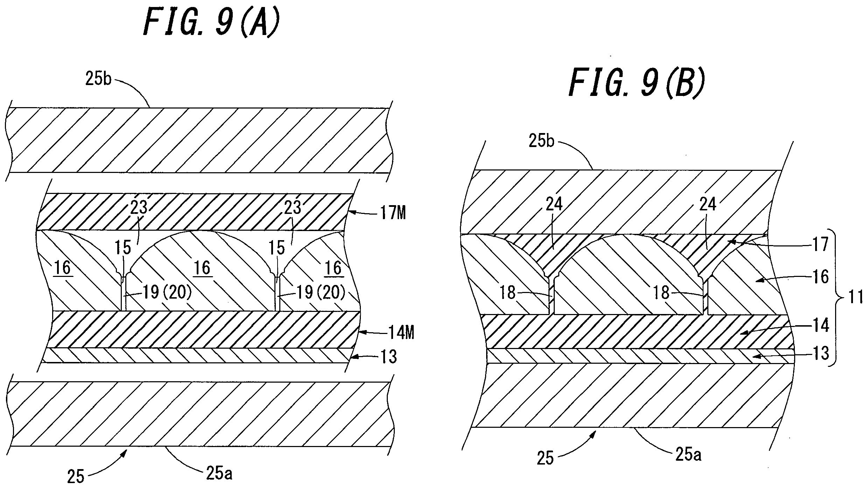

In order to manufacture the wear-resistant lining 11, a preceding process is carried out as shown in Fig.9 (A). Said elements are placed in a mold 25 having a lower mold 25a and an upper mold 25b. The elements are assembled in the opened mold 25 to be layered as shown in Fig.7. Preferably, each hard piece 16 is applied a bonding agent on its entire surface. The bonding agent may be selected from the known product as "Chemlock" (trademark) for example. Subsequently, a molding process is carried out as shown in Fig.9 (B). The mold 25 is closed and the assembled elements are heated and pressed between the lower and upper molds 25a, 25b.

During the molding process, the plate like un-vulcanized rubber material 14M is sandwiched and vulcanized between the metal support plate 13 and the hard pieces 16 so that a resilient base layer 14 is formed. The sheet like upper un-vulcanized rubber material 17M is also vulcanized between the hard pieces 16 and the upper mold 25b and filled in the valleys 23 to form fillers 24. During vulcanization, the both rubber materials 14M and 17M are plastically deformed and pressed to enter the gaps 15 and 15a to form the joints 18 and 18a.

The pressures of the both rubber materials 14M and 17M entering the gaps 15, 15a act to let the hard pieces 16 move, however, the hard pieces 16 are connected by contacting the respective projections 19 with the respective receiving surfaces 20 so that any hard pieces 16 are not allowed to move, and keep the alignment as well as the regularized width of the gaps 15, 15a. As a result, the both rubber materials 14M, 17M are entered the gaps 15, 15a with the width kept even and vulcanized, then the joints 18, 18a of even width are formed.

In consequence of chemical reaction caused in the bonding agent during the vulcanization, the base layer 14, the joints 18, 18a and the fillers 24 are firmly bonded to the bottom, the side-walls and the top-wall of the hard piece 16 respectively.

### (Second Embodiment)

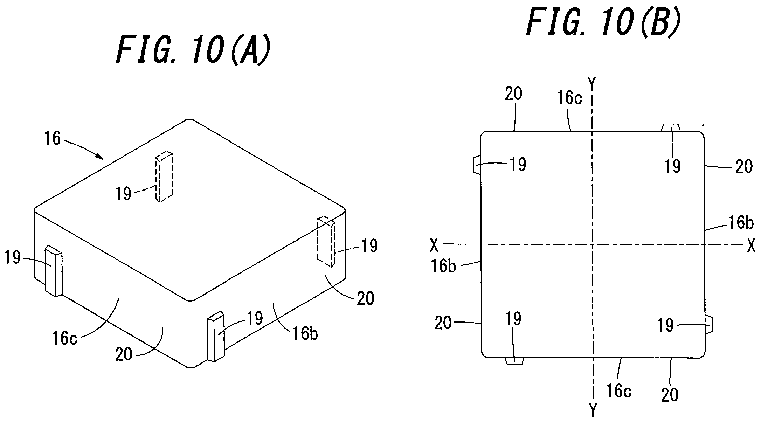

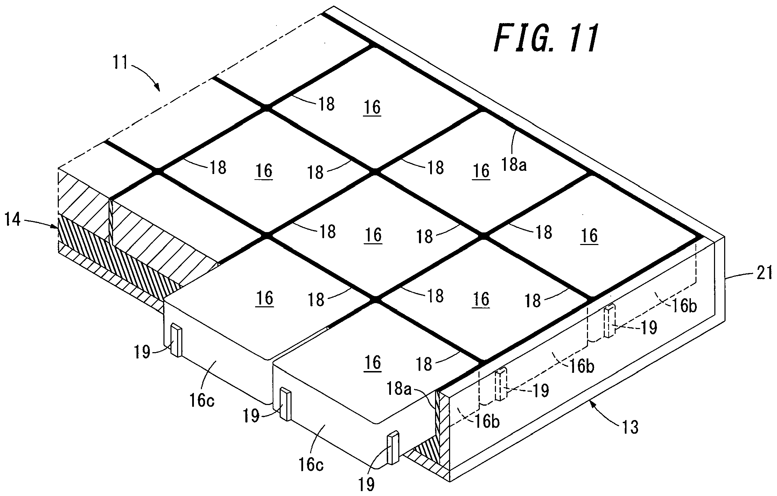

A second embodiment of the wear-resistant lining according to the present invention is shown in Fig.10 and Fig.11. The hard piece 16 is formed in its configuration of a rectangular parallelepiped. Accordingly, a top-wall forms a flat plane surface without forming an arch surface as mentioned above with respect to the first embodiment.

In the second embodiment, the wear-resistant lining 11 exposes the top-wall of the hard pieces 16 arranged on the base layer 14 in lengthwise and crosswise directions without providing any upper layer as mentioned above with respect to the first embodiment.

The other features of the second embodiment are same or similar to those mentioned about the first embodiment, and the detailed description is omitted.

### (Third Embodiment)

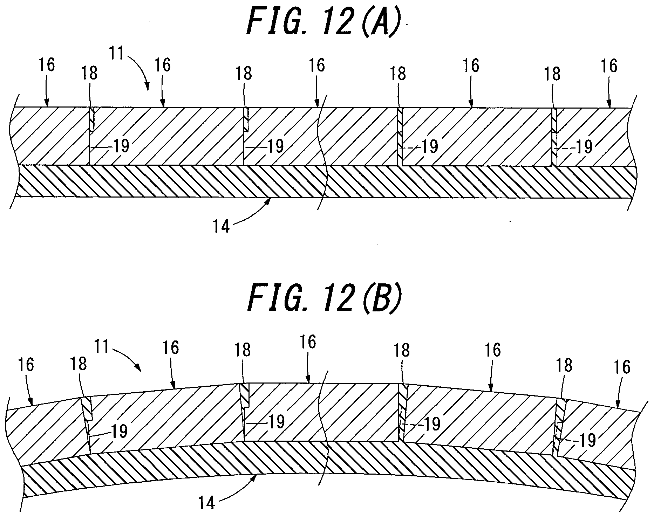

A third embodiment of the wear-resistant lining according to the present invention is shown in Fig.12. The wear-resistant lining 11 is made flexible without providing the metal support plate as mentioned above with respect to the first and second embodiments.

According to the flexibility, the wear-resistant lining 11 may be attached to any curved surface of hoppers or pulleys. As shown in Fig.12 (B), the joint 18 between the adjacent hard pieces 16 is deformed when the wear-resistant lining 11 is bent. The joints 18 are formed to have an even width and an enough thickness without including uneven narrower portion, and the joint 18 is hardly peeled off from the side-wall of the hard piece 16.

The other features of the third embodiment are same or similar to those mentioned about the second embodiment, and the detailed description is omitted.

### (Fourth Embodiment)

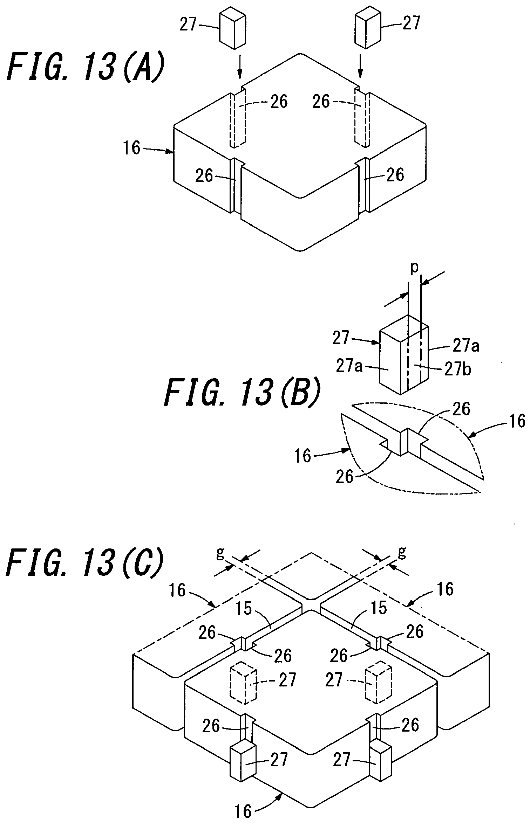

A fourth embodiment of the wear-resistant lining according to the present invention is shown in Fig.13. Since the specific feature of the fourth embodiment relates to projections of the hard piece 16, only the hard piece 16 is illustrated.

As shown in Fig.13 (A), the hard piece 16 has a rectangular shape in cross section to form four side-walls on its periphery and provides each side-wall with a recess 26 opened upward and a key 27 to be inserted in the recess 26. When the hard pieces 16 are arranged in lengthwise and crosswise directions as mentioned above, the respective recesses 26, 26 are opposed between the side-walls of the adjacent hard pieces 16, 16 as shown in Fig.13 (B) and Fig.13 (C). The key 27 is provided with both side portions 27a, 27a to be inserted in the mutual opposite recesses 26, 26 and a central portion 27b intervened between the side portions 27a, 27a to form a distance (p), and said central portion 27b functions as a projection 19 to form gaps 15 mentioned above with respect to the first embodiment.

Accordingly, when the hard pieces 16 are lined up in the lengthwise and crosswise directions by inserting the key 27 in the respective recesses 26 of the adjacent hard pieces 16 as shown in Fig.13 (C), the hard pieces 16 are connected so as not to move independently, and the grid-shaped gaps 15 having an even width (g) are formed.

The other features of the fourth embodiment are same or similar to those mentioned about the second embodiment, and the detailed description is omitted

### [References]

11 wear-resistant lining
12 hopper
13 metal support plate
14 resilient base layer
14M plate like un-vulcanized rubber material
15 gap
15a peripheral gap
16 wear resistant hard piece
16a bottom surface
16b, 16c side-wall
16d top-wall
17 upper layer
17M sheet like upper un-vulcanized rubber material
18 joint
18a peripheral joint
19 projection
20 receiving surface
21 standing wall
22a bolt
22b nut
23 valley
24 filler
25 mold
25a lower mold
25b upper mold
26 recess
27 key
27a side portion
27b central portion

## Claims

1. A wear-resistant lining comprising a resilient base layer (14) of vulcanized rubber, wear-resistant hard pieces (16) arranged on said base layer in lengthwise and crosswise directions and grid-shaped joints (18) of vulcanized rubber filled in gaps (15) between side-walls of the adjacent hard pieces, wherein said hard piece is bonded to said base layer and said joints, and
wherein said wear-resistant lining is manufactured by such a process that a plate-like un-vulcanized rubber material (14M) and wear-resistant hard pieces (16) arranged thereon with said gaps (15) are pressed and heated in a mold so that said resilient base layer (14) and said joints (18) are formed by vulcanizing said rubber material and filling it in said gaps,
**characterized in that**:
each side-wall of said hard piece (16) is provided with at least one projection (19) which contacts with the side-wall of the adjacent hard piece (16) so that said gap (15) is formed to have a predetermined width (g) in which said joint (18) is formed, and
said projections (19) of the hard pieces are embedded in said joints (18).

2. A wear-resistant lining according to claim 1 wherein said hard piece (16) has a rectangular shape in cross section to form four side-walls (16b,16b) (16c,16c) on the periphery and provides each side-wall with one projection (19),
wherein each of said side-walls includes a right-side portion and a left-side portion with respect to a center thereof in which the specific one side portion is provided with said projection (19) and the other side portion is formed with a receiving surface (20), and
whereby each projection (19) contacts with each corresponding receiving surface (20) between the adjacent hard pieces so that the side-walls of the adjacent hard pieces (16) (16) are connected by the respective projection (19) and the respective receiving surface (20) alternately.

3. A wear-resistant lining according to claim 1 or 2 wherein said hard piece (16) has a rectangular shape in cross section which includes a first pair of opposite side-walls (16b,16b) on which an axis (X) extends to intersect central portions thereof and a second pair of opposite side-walls (16c, 16c) on which an axis (Y) extends to intersect central portions thereof,
wherein a top-wall (16d) of an arch shape is provided to expand upward between said first pair of side-walls (16b) (16b) to which said second pair of side-walls (16c,16c) extend vertically to be connected therewith, and
wherein said hard pieces (16) are arranged on said base layer (14) according to the both directions along said axes (X) (Y) respectively so that valleys (23) are formed between said top-walls (16d) (16d) of the adjacent hard pieces, and un upper layer (17) of rubber is provided over the hard pieces and filled in said valley (23) to be integrated with said joints (18).

4. A wear-resistant lining according to claim 1, 2 or 3 wherein a metal support plate (13) is bonded underneath the resilient base layer (14) which provides its periphery with a standing wall (21), and
said hard pieces (16) positioned adjacent to said standing wall (21) contact their projections (19) with said standing wall (21) to form peripheral gaps (15a) between the side-walls thereof and said standing wall so that peripheral joints (18a) are formed with rubber filled in said peripheral gaps, and said projections (19) are embedded in said peripheral joints (18a).

5. A wear-resistant lining according to claim 1 wherein said hard piece (16) has a rectangular shape in cross section to form four side-walls on its periphery and provides each side-wall with a recess (26) in which a key (27) is inserted, and
said key (27) forms said projection (19) when inserted in the mutual recesses (26) (26) of the adjacent hard pieces (16) (16), and whereby said gap (15) for the joint (18) is made by said projection (19) between the side-walls of the adjacent hard pieces

## Patentansprüche

1. Verschleißfeste Beschichtung mit einer elastischen Basisschicht (14) aus vulkanisiertem Gummi, verschleißfesten harten Stücken (16), die auf der Basisschicht in Längs- und Querrichtungen angeordnet sind, und gitterförmigen Verbindungen (18) aus in Lücken (15) zwischen Seitenwänden der benachbarten harten Stücke gefülltem vulkanisiertem Gummi, wobei das harte Stück mit der Basisschicht und den Verbindungen verbunden ist, und
wobei die verschleißfeste Beschichtung durch einen derartigen Prozess hergestellt ist, dass ein plattenartiges, nicht vulkanisiertes Gummimaterial (14M) und mit den Lücken (15) darauf angeordnete, verschleißfeste harte Stücke (16) in einer Form gepresst und erhitzt werden, so dass die elastische Basisschicht (14) und die Verbindungen (18) durch Vulkanisieren des Gummimaterials und Füllen von ihm in die Lücken ausgebildet werden,
**dadurch gekennzeichnet, dass**
jede Seitenwand des harten Stücks (16) mit wenigstens einem Vorsprung (19) versehen ist, der mit der Seitenwand des benachbarten harten Stücks (16) so in Kontakt gelangt, dass die Lücke (15) derart ausgebildet ist, dass sie eine vorbestimmte Breite (g) hat, in welcher die Verbindung ausgebildet ist, und
die Vorsprünge (19) der harten Stücke in den Verbindungen (18) eingebettet sind.

2. Verschleißfeste Beschichtung nach Anspruch 1, wobei das harte Stück (16) eine rechteckige Form im Querschnitt hat, um vier Seitenwände (16b, 16b) (16c, 16c) am Umfang auszubilden, und jede Seitenwand mit einem Vorsprung (19) versieht,
wobei jede der Seitenwände einen rechtsseitigen Teilbereich und einen linksseitigen Teilbereich in Bezug auf ihr Zentrum enthält, wobei der spezifische eine seitliche Teilbereich mit dem Vorsprung (19) versehen ist und der andere seitliche Teilbereich mit einer aufnehmenden Oberfläche (20) versehen ist, und
wodurch jeder Vorsprung (19) mit jeder entsprechenden aufnehmenden Oberfläche (20) zwischen den benachbarten harten Stücken in Kontakt gelangt, so dass die Seitenwände der benachbarten harten Stücke (16) (16) durch den jeweiligen Vorsprung (19) und die jeweilige aufnehmende Oberfläche (20) abwechselnd verbunden sind.

3. Verschleißfeste Beschichtung nach Anspruch 1 oder 2, wobei das harte Stück (16) eine rechteckige Form im Querschnitt hat, die ein erstes Paar von entgegengesetzten Seitenwänden (16b, 16b) enthält, auf welchen sich eine Achse (X) derart erstreckt, dass sie ihre zentralen Teilbereiche kreuzt, und ein zweites Paar von entgegengesetzten Seitenwänden (16c, 16c), auf welchen sich eine Achse (Y) derart erstreckt, dass sie ihre zentralen Teilbereiche kreuzt,
wobei eine oberste Wand (16d) mit einer Bogenform vorgesehen ist, um sich zwischen dem ersten Paar von Seitenwänden (16b) (16b) nach oben auszudehnen, zu welchen sich das zweite Paar von Seitenwänden (16c, 16c) derart vertikal erstreckt, dass es damit verbunden ist, und
wobei die harten Stücke (16) auf der Basisschicht (14) gemäß den beiden Richtungen jeweils entlang den Achsen (X) (Y) angeordnet sind, so dass Täler bzw. Mulden (23) zwischen den obersten Wänden (16d) (16d) der benachbarten harten Stücke ausgebildet sind, und eine obere Schicht (17) aus Gummi derart über den harten Stücken vorgesehen und in die Mulde (23) gefüllt ist, dass sie mit den Verbindungen (18) integriert ist.

4. Verschleißfeste Beschichtung nach Anspruch 1, 2 oder 3, wobei eine metallische Stützplatte (13) unterhalb der elastischen Basisschicht (14) angebunden ist, welche ihren Umfang mit einer stehenden Wand (21) versieht, und
die harten Stücke (16), die benachbart zur stehenden Wand (21) positioniert sind, ihre Vorsprünge (19) mit der stehenden Wand (21) in Kontakt bringen, um periphere Lücken (15a) zwischen ihren Seitenwänden und der stehenden Wand auszubilden, so dass periphere Verbindungen (18a) mit in die peripheren Lücken gefülltem Gummi ausgebildet sind und die Vorsprünge (19) in den peripheren Verbindungen (18a) eingebettet sind.

5. Verschleißfeste Beschichtung nach Anspruch 1, wobei das harte Stück (16) eine rechteckige Form im Querschnitt hat, um vier Seitenwände an seinem Umfang auszubilden, und jede Seitenwand mit einem Ausschnitt (26) versieht, in welchen ein Schlüssel (27) eingefügt ist, und
der Schlüssel (27) den Vorsprung (19) ausbildet, wenn er in die wechselseitigen Ausschnitte (26) (26) der benachbarten harten Stücke (16) (16) eingefügt ist, und wodurch die Lücke (15) für die Verbindung (18) durch den Vorsprung (19) zwischen den Seitenwänden der benachbarten harten Stücke erzeugt wird.

## Revendications

1. Revêtement résistant à l'usure comprenant une couche de base résiliente (14) en caoutchouc vulcanisé, des pièces dures résistantes à l'usure (16), qui sont disposées sur ladite couche de base dans les sens longitudinal et transversal, et des joints en forme de grille (18) en caoutchouc vulcanisé comblant des espaces vides (15) entre des parois latérales des pièces dures adjacentes, ladite pièce dure étant reliée à ladite couche de base et auxdits joints, et
ledit revêtement résistant à l'usure étant fabriqué au moyen d'un procédé, selon lequel un matériau caoutchouteux non vulcanisé en plaque (14M) et des pièces dures résistantes à l'usure (16), qui sont disposées sur ledit matériau caoutchouteux en laissant lesdits espaces vides (15), sont pressés et chauffés dans un moule, de manière que ladite couche de base résiliente (14) et lesdits joints (18) soient formés par vulcanisation dudit matériau caoutchouteux et comblent lesdits espaces vides,
**caractérisé en ce que** :
chaque paroi latérale de ladite pièce dure (16) est dotée d'au moins une protubérance (19) qui vient au contact de la paroi latérale de la pièce dure adjacente (16), de manière que ledit espace vide (15) soit formé de sorte à présenter une largeur prédéterminée (g) dans laquelle ledit joint (18) est formé, et
lesdites protubérances (19) des pièces dures sont noyées dans lesdits joints (18).

2. Revêtement résistant à l'usure suivant la revendication 1, dans lequel ladite pièce dure (16) présente une section transversale de forme rectangulaire de manière à former quatre parois latérales (16b, 16b), (16c, 16c) sur sa périphérie et chaque paroi latérale est dotée d'une protubérance (19),
chacune desdites parois latérales comportant une partie latérale droite et une partie latérale gauche par rapport à un centre de celles-ci, dans lequel l'une parmi les parties latérales spécifiques est dotée de ladite protubérance (19) et l'autre parmi les parties latérales spécifiques est formée avec une surface de réception (20), et
chaque protubérance (19) vient au contact de chaque surface de réception correspondante (20) entre les pièces dures adjacentes, de manière que les parois latérales des pièces dures adjacentes (16) (16) soient reliées alternativement par la protubérance (19) et la surface de réception (20) correspondantes.

3. Revêtement résistant à l'usure suivant la revendication 1 ou 2, dans lequel ladite pièce dure (16) présente une section transversale de forme rectangulaire qui comporte une première paire de parois latérales opposées (16b, 16b), sur lesquelles s'étend un axe (X) pour intersecter leurs parties centrales et une seconde paire de parois latérales opposées (16c, 16c), sur lesquelles s'étend un axe (Y) pour intersecter leurs parties centrales,
une paroi de plafond (16d) de forme arquée étant prévue de manière à se dresser vers le haut entre une première paire de parois latérales (16b) (16b), vers laquelle s'étend verticalement et à laquelle est reliée une seconde paire de parois latérales (16c, 16c), et
lesdites pièces dures (16) étant disposées sur ladite couche de base (14) respectivement dans les deux sens, le long desdits axes (X) (Y), de manière que des creux (23) soient formés entre lesdites parois de plafond (16d) (16d) des pièces dures adjacentes, et une couche supérieure (17) en caoutchouc est prévue sur les pièces dures et comble ledit creux (2) pour l'intégrer dans lesdits joints (18).

4. Revêtement résistant à l'usure suivant la revendication 1, 2 ou 3, dans lequel une plaque de support métallique (13) est disposée sous la couche de base résiliente (14) dotant la périphérie de celle-ci d'une paroi debout (21), et
lesdites pièces dures (16), qui sont positionnées de manière adjacente à ladite paroi debout (21), viennent avec leurs protubérances (19) au contact de ladite paroi debout (21) pour former des espaces vides périphériques (15a) entre leurs parois latérales et ladite paroi debout, de sorte que des joints périphériques (18a) soient formés avec du caoutchouc comblant lesdits espaces vides périphériques et lesdites protubérances (19) sont noyées dans lesdits joints périphériques (18a).

5. Revêtement résistant à l'usure suivant la revendication 1, dans lequel ladite pièce dure (16) présente une coupe transversale de forme rectangulaire pour former quatre parois latérales sur sa périphérie et chaque paroi latérale est dotée d'une cavité (26), dans laquelle est insérée une clavette (27), et
en état insérée dans les cavités mutuelles (16) (26) des pièces dures adjacentes (16) (16), ladite clavette (27) forme ladite protubérance (19), et, par conséquent, ledit espace vide (15) pour le joint (18) est réalisé par ladite protubérance (19) entre les parois latérales des pièces dures adjacentes.
